# EUROPEAN PATENT APPLICATION

(11) **EP 2 003 050 A1**
(43) Date of publication of application: **17.12.2008**
(21) Application number: 07425378.2
(22) Date of filing: 15.06.2007
(51) Int. Cl.: B62K 21/14

(54) **Handlebar with elastic hinges**

(71) Applicant: DOMINO S.p.A., 23896 Sirtori, Frazione Bevera (Lecco) (IT)
(72) Inventor: Menghini, Luca, 22030 Magreglio (Como) (IT)
(74) Representative: Ripamonti, Enrico

(57) **Abstract**

A handlebar (1) for a vehicle such as a motorcycle or a two, three or four wheeled motor vehicle, a snowmobile or a seamobile, comprises a body (2) presenting a central portion (3) and end portions (4, 5) of constant cross-section, the central portion (3) and each end portion (4, 5) being connected together by a corresponding intermediate portion (7, 8) also of constant cross-section; each intermediate portion (7, 8) presents, in proximity to the central portion (3) and to the corresponding end portion (4, 5), end portions (12, 13) having sudden cross-section variations such as to define elastic regions acting as elastic hinges for the connection of said intermediate portion (7, 8) to the adjacent portions (4, 5), and to enable the handlebar (1) to undergo a controlled deformation thereat when subjected to stress during vehicle use.

## Description

The present invention relates to a handlebar in accordance with the introduction to the main claim.

Handlebars are known comprising a central portion and end portions, said central portion and each end portion being connected together by a corresponding intermediate portion having its axis inclined to the adjacent portions. In particular, handlebars are known with a rectilinear central portion, with each intermediate portion and end portion having its own different inclination to the adjacent portion.

These handlebars, with portions of constant and/or variable cross-section, are described for example in US5117707, US5257552, US5950497 and US5064157. By using said handlebars it has been found that, while optimally fulfilling their purpose, they present a considerable rigidity particularly in the connection regions between two adjacent portions. This rigidity leads to a consequent uncontrolled deformation capacity of the handlebar, depending on is use and the vehicle type.

In addition, the presence of the intermediate portions of variable cross-section does not allow crossbars to be fixed to them to stiffen the handlebar.

An object of the present invention is to provide a handlebar which is an improvement if compared to the known handlebars.

An object of the present invention is to provide a handlebar of the stated type which has a capacity to deform in a controlled manner as a result of stresses which it receives during the use of the vehicle on which it is mounted.

Another object is to provide a handlebar of the stated type with which a usual crossbar can be associated.

These and further objects which will be apparent to the expert of the art are attained by a handlebar in accordance with the accompanying claims.

The present invention will be more apparent from the accompanying drawings, which are provided by way of non-limiting example and in which:
Figure 1 is a front view of a handlebar according to the invention;
Figure 2 is a view of the handlebar of Figure 1 seen from above;
Figure 3 is a view of a first variant of the handlebar of Figure 1 seen from above;
Figure 4 is a front view of a second variant of the handlebar of Figure 1;
Figure 5 is a view of the second variant of the handlebar of Figure 1 seen from above;
Figure 6 is a front view of a detail of another variant of the handlebar of Figure 1;
Figures 7, 8 and 9 show various cross-sections, taken on the line 7-7 of Figure 1, through a part of the handlebar of Figure 1; and
Figure 10 is a front view of a detail of a further variant of the handlebar of Figure 1.

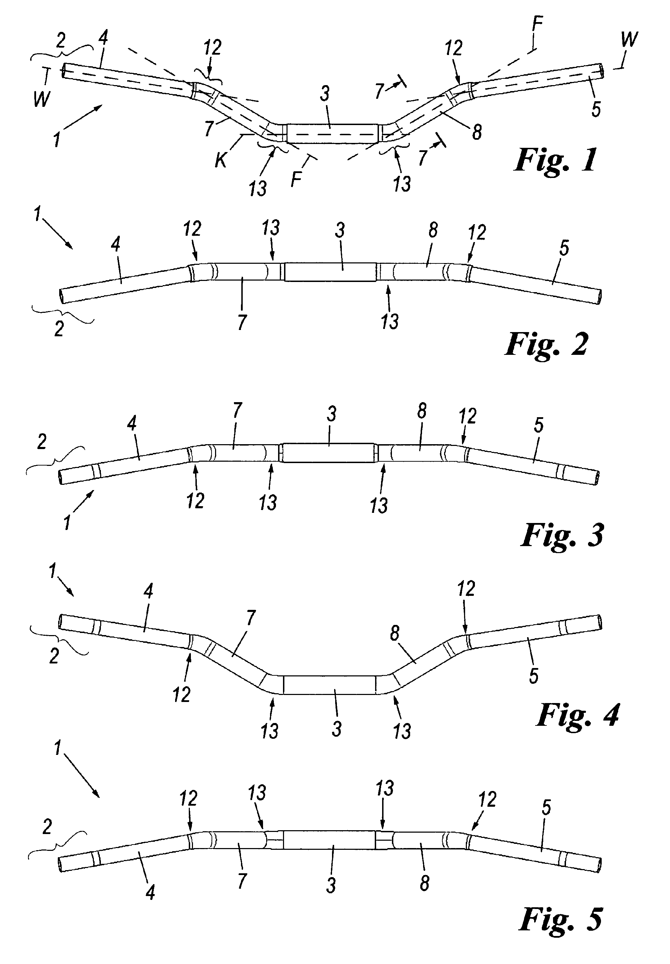

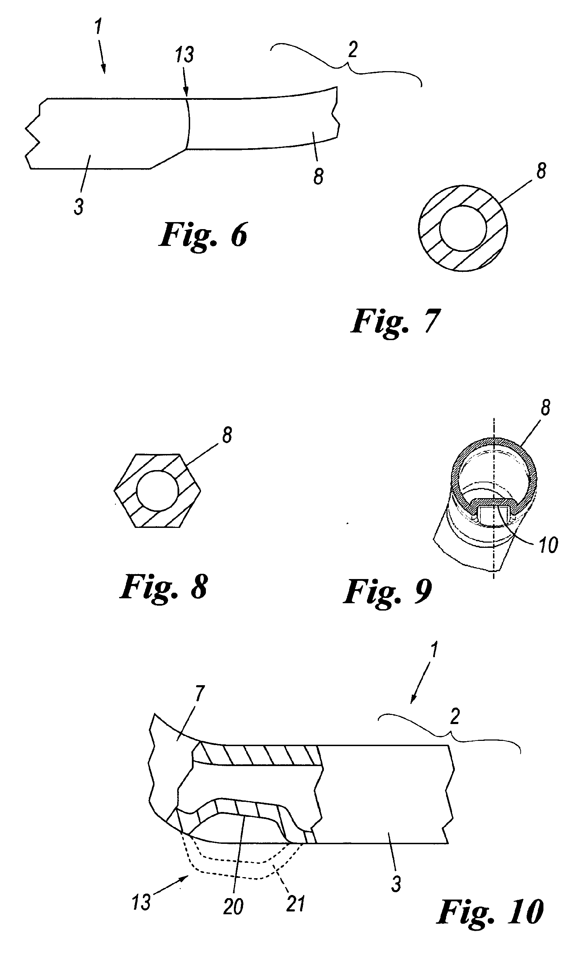

With reference to said figures, a handlebar according to the invention is indicated overall by 1 and comprises a body 2 presenting a central portion 3, two end portions 4 and 5 and intermediate portions 7 and 8 connecting the central portion 3 to corresponding end portions. The portions 3, 4, 5, 7 and 8 (see Figure 1) all have a constant cross-section and are disposed with their longitudinal axes K, W (for the portions 4 and 5) and F (for the portions 7 and 8) at an angle between them. The cross-section of said portions is not necessarily constant; for example, at least part of the said portions can have a cross-section which is circular (as in Figure 7), polygonal (i.e. triangular, square or multi-sided, as in Figure 8) or with longitudinal recesses or flattenings (with the recess 10 visible in the case of Figure 9). If the cross-section presents a recess 10, this can house an electric cable or a control cable connected to a control member or device associated with one of the end portions 4 and 5.

According to the invention, sudden cross-section variations are present at opposing end regions 12 and 13 of each intermediate portion 7 and 8 of the body 2, to define elastic regions acting as elastic hinges. These end regions acting as elastic hinges 12, 13 are present at the central portions 3 or end portions 4 or 5 where the corresponding intermediate portions connect to these latter. By virtue of said regions acting as elastic hinges, the handlebar can deform elastically in a controlled manner when the body 2 is subjected to stresses (of any type) during movement of the vehicle along the ground.

Said end regions 12, 13 can assume various forms: as a step with edges at 90° to the longitudinal axis of the adjacent central or end portion (Figure 1 and Figure 2); as an inclined surface along only a part of the intermediate portion (Figure 6), this offering a differentiated response by the handlebar to different stresses; or conical (Figure 3, Figure 4 and Figure 5). The end regions 12,1 3 acting as elastic hinges involve a small part of the intermediate portion, for example from 5 to 10 cm measured from the point of contact with the adjacent portion, while the remaining part of the intermediate portion is of constant cross-section.

These hinges can also be obtained by creating localized recesses 20 at the regions 12 and 13 or projections 21 in these latter (Figure 10).

By virtue of the invention, as the task of the handlebar is to transmit to the member determining the vehicle trajectory (front wheel, rudder, guide shoe, etc.) the forces which the driver applies to determine this vehicle trajectory, and also to transmit to the driver all the travel stresses which are not damped by the appropriate shock absorbers if these are used (suspensions for motor vehicles, snowmobiles, etc.), the geometry of the end portions or hinges 12, 13 enables a characteristic dynamic to be given to the handlebar which differs on the basis of the type of action being performed. This maintains high handlebar functionality because, if necessary, a usual collar can be securely fixed onto the two handlebar intermediate portions of constant cross-section, for mounting the strengthening crossbar.

Some particular embodiments of the invention have been described. Others are however possible and are to be considered as fatting within the scope of the ensuing claims.

## Claims

1. A handlebar (1) for a vehicle such as a motorcycle or a two, three or four wheeled motor vehicle, a snowmobile or a seamobile, comprising a body (2) presenting a central portion (3) and end portions (4, 5) of constant cross-section, the central portion (3) and each end portion (4, 5) being connected together by a corresponding intermediate portion (7, 8) also of constant cross-section, **characterised in that** each intermediate portion (7, 9) presents, in proximity to the central portion (3) and to the corresponding end portion (4, 5), end portions (12, 13) having sudden cross-section variations such as to define elastic regions acting as elastic hinges for the connection of said intermediate portion (7, 8) to the adjacent portions (4, 5), and to enable the handlebar (1) to undergo a controlled deformation thereat when subjected to stress during vehicle use.

2. A handlebar as claimed in claim 1, **characterised in that** said sudden cross-section variation is defined by a step with edges at 90° to the longitudinal axis (K, W) of the central portion (3) or adjacent end portion (4, 5).

3. A handlebar as claimed in claim 1, **characterised in that** said sudden cross-section variation is defined by a connection in the form of an inclined surface between the intermediate portion (7, 8) and the adjacent portion (3, 4, 5).

4. A handlebar as claimed in claim 1, **characterised in that** said sudden cross-section variation is defined by a connection in the form of an inclined surface present on only a part of the intermediate portion (7, 8) at the adjacent portion (3, 4, 5).

5. A handlebar as claimed in claim 1, **characterised in that** said sudden cross-section variation is defined by connection of conical pattern between the intermediate portion (7, 8) and the adjacent portion (3, 4, 5).

6. A handlebar as claimed in claim 1, **characterised in that** said sudden cross-section variation is defined by a recess (20) localized in the end region (12, 13) of the intermediate portion (7, 8).

7. A handlebar as claimed in claim 1, **characterised in that** said sudden cross-section variation is defined by a projection or thickening in the end region (12, 13) of the intermediate portion (7, 8).

8. A handlebar as claimed in claim 1, **characterised in that** at least one from among the central portion (3), each intermediate portion (7, 8) and each end region (4, 5) has, at least on one part thereof, a circular cross-section.

9. A handlebar as claimed in claim 1, **characterised in that** at least one from among the central portion (3), each intermediate portion (7, 8) and each end region (4, 5) has, at least on one part thereof, a polygonal cross-section.

10. A handlebar as claimed in claim 1, **characterised in that** at least one from among the central portion (3), each intermediate portion (7, 8) and each end region (4, 5) presents a longitudinal recess (10) on at least one part thereof.

11. A handlebar as claimed in claim 1, **characterised in that** at least one part of at least one from among the central portion (3), each intermediate portion (7, 8) and each end region (4, 5) presents a longitudinal flattening.
